# EUROPEAN PATENT APPLICATION

(11) **EP 2 495 196 A1**
(43) Date of publication of application: **05.09.2012**
(21) Application number: 11156599.0
(22) Date of filing: 02.03.2011
(51) Int. Cl.: B65H 20/24, B26D 1/62, B23D 25/12, B26D 5/20

(54) **Method of rotary cutting of web material**

(71) Applicant: Siemens Aktiengesellschaft, 80333 München (DE)
(72) Inventor: Pascual, Roberto, 48930 Getxo Bizkaia (ES)

(57) **Abstract**

In order to provide a simple and cheap technique for increasing the material speed, a method of rotary cutting of web material (2) using a rotary knife (3) is suggested, wherein in a cutting phase the rotary knife (3) moves synchronously with the material (2), and wherein a roll feed (4) is employed for feeding material (2) to the rotary knife (3), characterized in that the roll feed (4) accelerates and/or decelerates the material (2) in a way that the material speed changes at least once before the material (2) reaches the cutting area (8).

## Description

The present invention relates to a method and system for rotary cutting of web material.

Cutting of web material as e.g. paper, cardboard, corrugated, foil, film or metal by means of a cross-cutter is used in cases where rotary processing is to be carried out on the material during an ongoing production process, e.g. cutting, printing or embossing. If a rotary knife is used as a cross-cutter the rotary knife axis has to move synchronously with the material line during the cutting phase. For that purpose the rotary knife axis is moved using a special velocity profile between two cuts. Depending on the cutting length required, the knife drum moves faster or slower than the web material outside the cutting area.

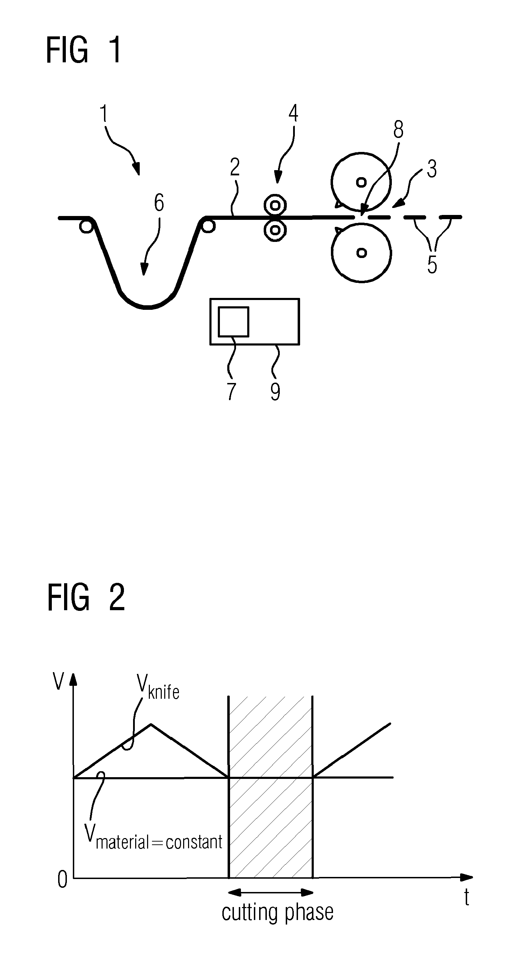

For cutting short formats at constant material speed, the rotary knife is often to slow. In these cases, it is known to accelerate the rotary knife between two cuts, as it is shown in FIG 2. Prior to the cutting the rotary knife is decelerated again such that in the cutting phase the speed of the rotary knife again equals the material speed. However, depending on the type of rotary knife, material, etc., the knife speed may differ from the material speed.

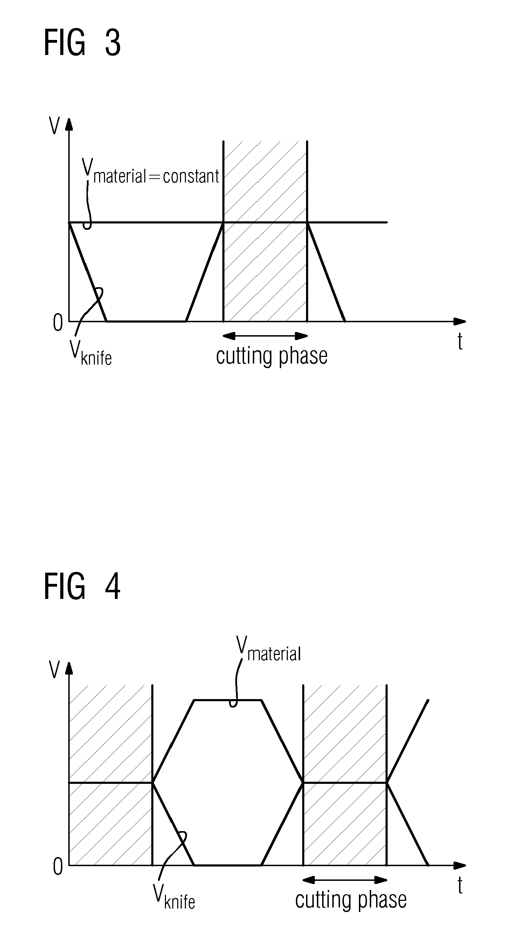

For cutting long formats at constant material speed, the rotary knife is often to fast. In theses cases, it is known to decelerate the rotary knife between two cuts, even has to bring the rotary knife to a stop if necessary, as it is shown in FIG 3. Prior to the cutting, the rotary knife is accelerated again such that in the cutting phase the speed of the rotary knife again equals the material speed. Again, depending on the type of rotary knife, material, etc., the knife speed may differ from the material speed.

In each case, the speed of the rotary knife is synchronized with the speed of the material using a velocity profile. Thereby, the velocity of the material and the rotary knife can be equal or not.

Efforts have been made in order to increase the line speed. However, obtaining very high line speeds can only be achieved by using very strong motors and drives for accelerating and decelerating the rotary knife and/or by reducing the intertia of the machine, both leading to a large increase in costs.

Therefore, it is an object of the present invention to provide a simple and cheap technique for increasing the material speed.

This object is achieved according to the invention by a method of rotary cutting of web material using a rotary knife, wherein in a cutting phase the rotary knife moves synchronously with the material, and wherein a roll feed is employed for feeding material to the rotary knife, characterized in that the roll feed accelerates and/or decelerates the material in a way that the material speed changes at least once before the material reaches the cutting area.

The object of the present invention is also achieved by a system for rotary cutting of web material using a rotary knife, the system comprising a rotary knife for rotary cutting of web material, and a roll feed for feeding material to the rotary knife, characterized in that the system further comprises a control apparatus, said control apparatus being adapted for controlling the roll feed in a way that the material which is fed to the rotary knife by said roll feed is accelerated and/or decelerated in a way that the material speed changes at least once before the material reaches the cutting area.

The object of the present invention is also achieved by a computer program to be executed in a computer, said program comprising computer instructions to control a roll feed in a way that the material which is fed to the rotary knife by said roll feed is accelerated and/or decelerated in a way that the material speed changes at least once before the material reaches the cutting area, when the computer program is executed in the computer.

A core idea of the invention is to provide a technique for rotary cutting of web material using a rotary knife, according to which a rotary knife system is combined with a changing line speed. A roll feed is employed that changes the speed of the web material to be fed to the rotary knife. The roll feed is controlled by a control apparatus accordingly.

With the present invention a simple and cheap technique for increasing the material speed has been provided without changing the rotary knife system at all. Changes apply only to the transport of the web material. Therefore, the invention can be used with existing rotary knife systems without any difficulty.

These and other aspects of the invention will be further elaborated on the basis of the following embodiments which are defined in the dependent claims.

According to a preferred embodiment of the invention the material is transported through the cutting area at a constant material speed. In this way, a synchronous movement can be achieved very easily. Alternatively, the material is transported through the cutting area at a variable speed. In both cases a constant or variable speed of the rotary knife can be applied, according to the chosen velocity profile.

According to another preferred embodiment of the invention a loop is employed in front of the roll feed in order to provide a material storage. Whereas in prior art applications a loop is employed mainly to asure a correct alignment of the web material, according to the invention the loop provides a material storage in front of, i.e. prior to the roll feed. In other words, the loop guarantees a continuous supply of web material to the roll feed independent of the global line speed of the system.

These and other aspects of the invention will be described in detail hereinafter, by way of example, with reference to the following embodiments and the accompanying drawings; in which:
- FIG 1: shows schematically a cutting system with loop, roll feed, and rotary knife,
- FIG 2: shows a diagram illustrating the speeds of rotary knife and web material during cutting of short formats (prior art),
- FIG 3: shows a diagram illustrating the speeds of rotary knife and web material during cutting of long formats (prior art),
- FIG 4: shows a diagram illustrating the speeds of rotary knife and web material during cutting of long formats according to the invention,
- FIG 5: shows a diagram illustrating the speeds of rotary knife and web material during cutting of short formats according to the invention.

As illustrated in FIG 1, a system 1 for cutting of web material 2 as e.g. paper, cardboard, corrugated, foil, film or metal according to the present invention comprises a rotary knife 3 for rotary cutting of the material, a roll feed 4 for feeding material 2 to the rotary knife 3. The rotary knife 3 is adapted to divide the moving web material 2 into pieces 5.

The rotary knife 3 is driven by a first motor drive system, said drive system comprising at least one motor or a group of motors (not shown). The system 1 further comprises a loop 6 in front of the roll feed 4 in order to provide a material storage. The roll feed 4 then receives material from the loop 6. The system 1 further comprises a control module 7 adapted for controlling the roll feed 4 in a way that the material which is fed to the rotary knife 3 by said roll feed 4 is accelerated and/or decelerated in a way that the material speed changes at least once before the material 2 reaches the cutting area 8. For that purpose the roll feed 4 comprises a second motor drive system, said drive system comprising at least one motor or a group of motors (not shown), e.g. a servo motor, for rotating the rolls of the roll feed 4. The second motor drive is adapted to be directly or indirectly controllable by the control module 7.

Usually the material speed is constant in the cutting area. However, on some occasions of acceleration or deceleration of the entire line, the material speed can change.

The cutting area 8 is the area around the cutting point between the two rotary knifes, in which area the rotary knife 3 and the material 2 move synchronously. The time which a certain point of material 2 needs to move through the cutting area 8 is called cutting phase.

In the illustrated embodiment the control module 7 is integral part of a control device 9 adapted to control the global cutting system 1. The control device 9 further comprises modules for controlling the rotary knife 3, modules for controlling the material alignment, and other controlling modules (not shown).

In order to implement the concept of the present invention, no major changes have to be made to a prior art cutting system 1. The invention can be applied to a standard cutting system 1 very easily. The roll feed 4 needs to be provided with a motor drive and the motor controls have to be recalculated, which can be done by applying a updated version of the controlling software to the control device 9 of the cutting system 1.

According to the present invention, the line speed during the cutting phase is the same as with prior art solutions. However, in the phase between the cuts, there is an superimposed additional movement of the material in order to change the average line speed, e.g. in order to increase the average line speed during cutting of long formats or to reduce the average line speed during cutting of short formats.

In the present rotary knife application, a "short format" is defined as a format where the rotary knife, before the next cut, has to be at first accelerated and then decelerated outside the cutting area; and a "long format" is defined as a format where the rotary knife, before the next cut, has to be at first decelerated and then accelerated outside the cutting area. Bethween "long formats" and "short formats" there are "circumference formats" where the rotary knife always runs at a constant speed.

In the following, two examples of cutting metal are illustrated and the data given below are typical values of a cutting system for metal material. The rotary knife 3 employed is an eccentric rotary knife designed for cutting lines for metal. However, the present invention is neither limited to cutting metal nor to the use of eccentric rotary knifes. Other materials can be cut and other types of rotary knifes can be used instead.

In a first example, a long format length of 2000 mm shall be cut. In a prior art solution the line speed for a format length of 2000 mm is limited to 90 m/min, due to maximum speeds and torque in the rotary knife. According to the present invention now a cutting length of 1540 mm is programmed. In the prior art solution the line speed for a format length of 1540 mm would also be limited to 90 m/min. Outside the cutting phase, the roll feed 4 provides a superimposed movement of 460 mm to the material 2. For this purpose the material 2 is accelerated by the roll feed 4 from an intial 90 m/min to 150 m/min in a first step and decelerated again by the roll feed 4 in a subsequent second step, see FIG 4. Between the areas of non-constant velocity there is a phase of constant line speed at 150 m/min. The acceleration and deceleration is carried out in a way that the material gains an additional 460 mm feed forward movement and the line speed is 90 m/min again before the next cut. Regardless of whether the rotary knife 3 is cutting a cut length of 2000 mm using a prior art technique or a cut length of 1540 mm using the present invention, the path of the rotary knife 3 is the same in both cases. Hence, the rotary knife 3 is decelerated and accelerated again between two cuts such that in the cutting phase the speed of the rotary knife again equals the material speed.

With this approach, an average line speed of 117 m/min can be achieved without any change to the rotary knife 3, i.e. an increase of nearly 30 % compared to the original line speed.

If applicable, the material transport could also be programmed in a way that there is no phase of constant line speed between the areas of non-constant velocity.

In a second example, a short format length of 300 mm shall be cut. In a prior art solution the line speed for a 300 mm format length is limited to 39 m/min, and the line speed for a 400 mm format length is limited to 72 m/min. According to the present invention now a cutting length of 400 mm is programmed.

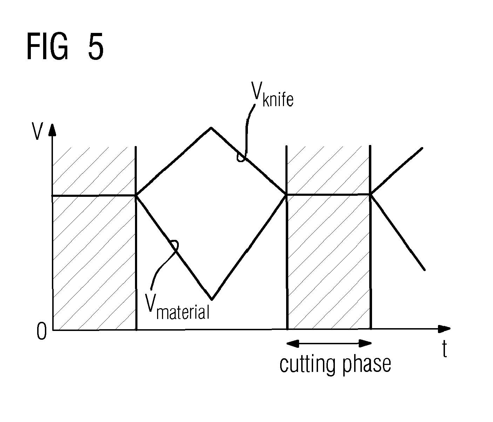

Outside the cutting phase, the roll feed 4 provides a superimposed movement of minus 100 mm to the material 2. For this purpose the material 2 is decelerated by the roll feed 4 from an initial 72 m/min to 23 m/min in a first step and accelerated again by the roll feed in a subsequent second step, see FIG 5. The acceleration and deceleration is carried out in a way that there is a forward delay of 100 mm and the line speed is 72 m/min again before the next cut.

Regardless of whether the rotary knife 3 is cutting a cut length of 300 mm using a prior art technique or a cut length of 400 mm using the present invention, the movement of the rotary knife 3 is the same in both cases. Hence the rotary knife 3 is accelerated and decelerated again between two cuts, as it is shown in FIG 2. Prior to the cutting the rotary knife is decelerated again such that in the cutting phase the speed of the rotary knife 3 again equals the material speed.

With this approach, an average line speed of 54 m/min can be achieved without any change to the rotary knife, i.e. an increase of 38 % compared to the original line speed.

In this example, there is no phase of constant line speed between the acceleration and deceleration phases. However, the material transport could be programmed in a way that there is such a phase of constant line speed, if applicable.

In both examples, both the knife speed V(knife) and the speed of the web material V(material) changes between two cuts, as it will normally be the case. However, in cases of some special format lengts, it is possible to leave the knife speed constant and to change only the speed of the roll feed between two cuts.

The total costs of using the rotary knife 3 in combination with a modified roll feed 4 according to the present invention are lower that the costs of a larger dimensioning of the rotary knife 3 in order to achieve a higher average line speed.

All appliances described above are adapted to carry out the method according to the present invention. All devices, e. g. the rotary knife 3, the roll feed 4, and the control module 7, are constructed and programmed in a way they operate in accordance with the method of the invention. In particular, the control module 7 is adapted for control the roll feed 4 according to the method of the invention. This is achieved according to the invention by means of a computer software program comprising computer instructions adapted for carrying out the steps of the inventive method, when the software is executed in the processing unit of a computer 9. The processing unit itself may comprise functional modules or units, which are implemented in form of hardware, software or in form of a combination of both.

The technical effects necessary according to the invention can thus be realized on the basis of the instructions of a computer program 7 in accordance with the invention. Such a computer program 7 can be stored on a carrier such as a CD-ROM or DVD or it can be available over the internet or another computer network. Prior to executing the computer program 7 is loaded into the computer 9 by reading the computer program 7 from the carrier, for example by means of a CD-ROM or DVD player, or from the internet, and storing it in the memory of the computer 9. The computer 9 includes inter alia a central processor unit (CPU), a bus system, memory means, e.g. RAM or ROM etc., storage means, e.g. floppy disk or hard disk units etc. and input/output units. Alternatively, the inventive method could be implemented in hardware, e. g. using one or more integrated circuits.

A basic idea of the invention is to control the material speed, i.e. accelerate/decelerate or decelerate/accelerate, between two cuts. Using a roll feed 4, in particular in connection with a loop 6, is one specific way to change the material speed dynamically. Another way for dynamic changing the material speed, without employing a loop, would be to accelerate/decelerate or decelerate/accelerate the complete line, and not only the small part of the material located between the roll feed 4 and the rotary knife 3, as described above.

## Claims

1. Method of rotary cutting of web material (2) using a rotary knife (3), wherein in a cutting phase the rotary knife (3) moves synchronously with the material (2), and wherein a roll feed (4) is employed for feeding material (2) to the rotary knife (3), **characterized in that** the roll feed (4) accelerates and/or decelerates the material (2) in a way that the material speed changes at least once before the material reaches the cutting area (8).

2. Method as claimed in claim 1, **characterized in that** the material (2) is transported through the cutting area (8) at a constant material speed.

3. System (1) for carrying out the method as claimed in claim 1, the system (1) comprising a rotary knife (3) for rotary cutting of web material (2), and a roll feed (4) for feeding material (2) to the rotary knife (3), **characterized in that** the system (1) further comprises a control apparatus (7), said control apparatus (7) being adapted for controlling the roll feed (4) in a way that the material (2) which is fed to the rotary knife (3) by said roll feed (4) is accelerated and/or decelerated in a way that the material speed changes at least once before the material (2) reaches the cutting area (8) .

4. System (1) as claimed in claim 3, charcterized in that a loop (6) is employed in front of the roll feed (4) in order to provide a material storage.

5. Computer program (7) for a system (1) for rotary cutting of web material (2) using a rotary knife (3), said computer program (7) comprising computer instructions to control a roll feed (4) in a way that the material (2) which is fed to the rotary knife (3) by said roll feed (4) is accelerated and/or decelerated in a way that the material speed changes at least once before the material (2) reaches the cutting area (8), when the computer program (7) is carried out in a computer (9).
